Europäisches Patentamt

European Patent Office

Office européen des brevets

(11) Veröffentlichungsnummer: **0 280 181**
**A2**

(12) **EUROPÄISCHE PATENTANMELDUNG**

(21) Anmeldenummer: 88102325.3

(51) Int. Cl.⁴: **B29C 31/00** , //B29L22:00

(22) Anmeldetag: 18.02.88

(30) Priorität: 25.02.87 DE 3705945

(43) Veröffentlichungstag der Anmeldung:
31.08.88 Patentblatt 88/35

(84) Benannte Vertragsstaaten:
DE FR GB IT

(71) Anmelder: **Krupp Corpoplast Maschinenbau GmbH.**
**Angerburger Strasse 24**
**D-2000 Hamburg 70(DE)**

(72) Erfinder: **Albrecht, Peter**
**Sülzbrackring 1**
**D-2050 Hamburg 80(DE)**
Erfinder: **Appel, Adolf**
**Bauernworth 11**
**D-2111 Egestorf(DE)**
Erfinder: **Kleimenhagen, Günter**
**Francoper Strasse 41a**
**D-2104 Hamburg 92(DE)**
Erfinder: **Raymann, Wolfgang**
**Groten Hoff 15**
**D-2000 Hamburg 67(DE)**
Erfinder: **Vogel, Klaus**
**Rütersberg 4a**
**D-2000 Barsbüttel(DE)**
Erfinder: **Wiedenfeld, Walter**
**Tannenweg 2**
**D-2000 Hamburg 62(DE)**

(74) Vertreter: **Koepsell, Helmut, Dipl.-Ing.**
**Mittelstrasse 7**
**D-5000 Köln 1(DE)**

(54) Vorrichtung zum Herstellen von Hohlkörpern aus thermoplastischen Kunststoff.

(57) Eine Vorrichtung zum Herstellen von Hohlkörpern aus thermoplastischem Kunststoff in großen Stückzahlen ist so ausgebildet, daß mehrere Stationen, in denen Behandlungsschritte an den Formlingen durchgeführt werden, in horizontalen Abständen entlang der Mantelfläche eines vertikalen, im wesentlichen zylindrischen Gehäuses angeordnet sind und die zu behandelnden Formlinge von oben nach unten durch die Baueinheit und eine der Behandlungsstationen geführt werden. Innerhalb der Baueinheit ist eine um eine vertikale Achse rotierende Kurventrommel angeordnet, durch welche die in zumindest einigen der Behandlungsstationen befindlichen Werkzeuge betätigt werden. Ggf. zwei oder mehr derartiger Baueinheiten können zur Durchführung aufeinanderfolgender Behandlungsschritte an den Formlingen hintereinandergeschaltet sein.

## Vorrichtung zum Herstellen von Hohlkörpern aus thermoplastischem Kunststoff

Die Erfindung betrifft eine Vorrichtung zum Herstellen von Hohlkörpern aus thermoplastischem Kunststoff unter Anwendung eines Verfahrens, bei welchem ein hohler, im wesentlichen zylindrischer und mit einem Boden versehener Formling einer aus mehreren Schritten bestehenden Behandlung unterzogen wird, bei welcher zumindest ein Teilbereich des Formlings temperiert und verformt wird. Dieses Verfahren kann beispielsweise so ablaufen, daß durch Strecken der Wandung eines Formlings unter der Glasumwandlungstemperatur des ihn bildenden Materials ein Zwischenerzeugnis hergestellt wird, welches an seinem offenen Ende voraufgeweitet, danach, ausgehend von diesem offenen, voraufgeweiteten Ende, zumindest über den größten Teil seiner Längserstreckung aufgeweitet und dann thermofixiert wird, worauf der an die Öffnung angrenzende Wandbereich des aufgeweiteten Zwischenerzeugnisses eine Durchmesserverringerung erfährt und an das freie Ende ein Bördelrand angeformt wird. Derartige dosenförmige Hohlkörper, die beispielsweise zum Abfüllen von unter Überdruck stehenden Getränken verwendbar sind, werden in sehr großen Stückzahlen benötigt, so daß es erforderlich ist, die Vorrichtung so auszubilden, daß gleichzeitig mehrere Formlinge und daraus gebildete Zwischenerzeugnisse den gleichen Behandlungsschritten unterworfen werden. Dies setzt voraus, daß die Vorrichtung mit einer entsprechend großen Anzahl von gleichen Behandlungsstationen versehen ist, die parallel zueinander geschaltet sind.

Der Erfindung liegt die Aufgabe zugrunde, eine derartige Vorrichtung so auszubilden, daß eine oder mehrere in Reihe geschaltete Behandlungsstation(en) zur Durchführung von Behandlungsschritten an den Formlingen mehrfach vorhanden und derart angeordnet sind, daß auch bei einer großen Anzahl von parallel zueinander geschalteten Behandlungsstationen diese bei verhältnismäßig kleinem Platzbedarf und übersichtlichem Aufbau derart zusammengefaßt sind, daß eine größere Anzahl von parallel geschalteten Behandlungsstationen einen gemeinsamen, zentralen Antrieb für zumindest einen wesentlichen Teil der erforderlichen Funktionen aufweisen kann. Ferner wird angestrebt, die Anordnung so treffen zu können, daß bei unterschiedlicher Zeitdauer der einzelnen, aufeinanderfolgenden und an einem Formling oder Zwischenformling durchzuführenden Behandlungen, die von den Formlingen zu durchlaufenden Behandlungsstationen keine oder nur geringe Totzeiten haben. Es soll somit vermeidbar sein, daß der zeitaufwendigste oder langsamste Bearbeitungsvorgang die Arbeitsgeschwindigkeit der Gesamtvorrichtung bestimmt. Die herzustellenden großen Stückzahlen pro Zeiteinheit setzen weiterhin voraus, daß bei einer Störung in einer Behandlungsstation oder einer Linie von in Reihe geschalteten Behandlungsstationen nicht die gesamte Vorrichtung stillgesetzt werden muß. Vielmehr soll es möglich sein, nur die Linie außer Betrieb zu nehmen, in der ein Störfall vorliegt, ohne daß dadurch der Betrieb der anderen Linien gestört wird.

Zur Lösung dieser Aufgabe schlägt die Erfindung vor, daß mehrere Behandlungsstationen in horizontalen Abständen an der Mantelfläche eines vertikalen, im wesentlichen zylindrischen Gehäuses angeordnet sind und die so aus mehreren Behandlungsstationen gebildete Baueinheit in ihrem oberen Bereich eine um die vertikale Achse rotierende Ringscheibe zum Zuführen der zu behandelnden Formlinge und in ihrem unteren Bereich eine um die vertikale Achse rotierende zweite Ringscheibe zum Wegführen der behandelten Formlinge aufweist und die vertikalen Abstände zwischen oberer Ringscheibe und jeweiliger Behandlungsstation einerseits sowie Behandlungsstation und unterer Ringscheibe andererseits durch im wesentlichen vertikale Transportwege überbrückt werden. Dabei können jeweils zumindest zwei Behandlungsstationen, in denen aufeinanderfolgende· Behandlungsschritte am Formling durchgeführt werden, zu einer Behandlungseinheit zusammengefaßt und mehrere derartige Behandlungseinheiten in horizontalen Abständen an der Mantelfläche des Gehäuses angeordnet sein, wobei in jeder Behandlungseinheit Transportelemente vorgesehen sind, durch die der Abstand zwischen den Behandlunsstationen einer Behandlungseinheit überbrückt wird.

Die Beschreibung des Gehäuses als "im wesentlichen zylindrisch" ist so zu verstehen, daß dieses eine umlaufende, also endlose Mantelfläche aufweist, so daß ein etwa säulenförmiges Gebilde entsteht, entlang dessen Umfangsfläche die Behandlungsstationen angeordnet sind. Die Mantelfläche kann mit Abflachungen versehen sein, an denen die Behandlungsstationen angeordnet sind. Es ist auch möglich, das Gehäuse als Vieleck auszubilden z. B. derart, daß die Anzahl der von jeweils zwei benachbarten Ecken begrenzten Flächen der Anzahl der Behandlungsstationen oder -einheiten einheiten entspricht. In allen Fällen bleibt der wesentliche Vorteil der Erfindung gewahrt, daß viele parallele Behandlungsstationen bzw. -einheiten auf geringer Grundfläche untergebracht werden, wobei die Möglichkeit besteht, sämtlichen Behandlungsstationen oder -einheiten einer Baueinheit gemeinsame Einrichtungen zum Zuleiten der Formlinge zu dieser Baueinheit und zum Ableiten der Formlinge von dieser Baueinheit zuzuordnen. Sämtliche Stationen sind bei Anordnung an der äußeren Mantelfläche des Gehäuses gut zugänglich, so daß trotz der Vielzahl der Behandlungsstationen die Vorrichtung übersichtlich bleibt und wenig Bedienungspersonen erfordert. Die Anzahl der an einer Baueinheit unterzubringenden Behandlungsstationen hängt im wesentlichen nur vom Durchmesser des Gehäuses ab. Der grundsätzliche Aufbau der Baueinheit bleibt unabhängig von der Anzahl der Stationen gleich.

Der Ausdruck "im wesentlichen vertikale Transportwege" soll bedeuten, daß diese dazu dienen, vertikale Abstände zu überbrücken, wobei im Bedarfsfall die Transportwege auch von der Vertikalen etwas abweichend verlaufen können, um gleichzeitig auch horizontale Abstände zu überbrücken. Die vertikale Komponente der Transportwege sollte ausreichend sein, um den Transport der Formlinge durch deren Eigengewicht zu bewirken, so daß keine besonderen Transportmittel vorgesehen sein müssen.

Gemäß einem weiteren Vorschlag der Erfindung können die Behandlungsstationen einer Behandlungseinheit im wesentlichen nebeneinander angeordnet und die Transportelemente für den Transport der Formlinge zwischen den Behandlungsstationen jeweils einer Behandlungseinheit als Greifereinrichtungen ausgebildet sein. Letztere können auch den Transport der Formlinge zwischen dem im wesentlichen vertikalen Transportweg, der den Abstand zwischen oberer Ringscheibe und erster Behandlungsstation der Behandlungseinheit überbrückt, und/oder zwischen zweiter Behandlungsstation der Behandlungseinheit und dem im wesentlichen vertikalen Transportweg, der den Abstand zwischen zweiter Behandlungsstation und unterer Ringscheibe überbrückt, bewirken. Im allgemeinen wird es nicht zweckmäßig sein, die vertikalen Transportwege den Behandlungsstationen so zuzuordnen, daß die von oben kommenden Formlinge direkt in die erste Behandlungsstation fallen oder die aus der zweiten Behandlungsstation kommenden Formlinge direkt in den daran nach unten anschließenden Transportweg fallen. -Die Anordnung der Behandlungsstationen einer Behandlungseinheit horizontal nebeneinander hat den Vorteil, daß die zwischen den Behandlungsstationen befindlichen Transportwege und damit die Transportzeiten kurz sind.

Die für die Behandlung der Formlinge erforderliche Mittel sind vorteilhaft im wesentlichen parallel zur vertikalen Längsachse des Gehäuses bewegbar an diesem angebracht. Diese Mittel können Werkzeuge sein, die z. B. Formgebungsvorgänge an den Formlingen ausführen. Es kann sich dabei aber auch um andere Behandlungseinrichtungen, z. B.

solche handeln, die mit dem Temperieren der Formlinge zusammenhängen. Bei Vorhandensein von zwei oder mehr Behandlungsmitteln in einer Behandlungsstation können wenigstens einige derselben vertikal übereinander angeordnet sein.

Als besonders vorteilhaft hat sich eine Ausgestaltung herausgestellt, bei welcher innerhalb des stationären, im wesentlichen zylindrischen Gehäuses eine um die vertikale Achse drehbare Trommel angeordnet ist, die an ihrer Mantelfläche Kurven trägt, mit denen Kurvenrollen in Eingriff sind, die wenigstens einem der Behandlungsmittel in der jeweiligen Behandlungsstation zugeordnet sind. Auf diese einfache Weise wird erreicht, daß wenigstens ein Teil der Behandlungsmaßnahmen in sämtlichen entlang dem Umfang des Gehäuses angeordneten Behandlungsstationen-oder einheiten von einem gemeinsamen, zentralen Mittel angetrieben wird, wobei die Kurven über Verbindungsmittel, z. B. Rollen, deren Achsen durch Durchbrechungen im stationären Gehäuse hindurchgeführt sind, mit den Bearbeitungsmitteln in Verbindung stehen.

Die nebeneinander befindlichen Behandlungsstationen oder -einheiten sind stationär angeordnet, während des zentrale Antriebsmittel, d. h. die Kurventrommel daran vorbeibewegt wird und wenigstens einen Teil der für die Behandlung erforderlichen Mittel betätigt. Diese Ausgestaltung erlaubt eine Anordnung, bei welcher die einzelnen Behandlungsstationen bzw. Behandlungseinheiten von außen zugänglich sind, so daß sie ohne Schwierigkeiten überwacht und gewartet werden können.

Die Höhe der Trommeln und damit die Höhe des Gehäuses hängen ab von der Anzahl der Kurven auf der Trommel. Die Anzahl der Kurven wird wiederum bestimmt durch die Anzahl der in jeder Behandlungseinheit durch die Trommel zu betätigenden Behandlungsmittel. Dabei besteht ohne weiteres die Möglichkeit, die Abstände zwischen den Kurven auf der Trommel und den jeweils zu betätigenden Behandlungsmitteln durch Verbindungselemente, z. B. Stangen, Bowdenzüge oder dgl. zu überbrücken. Die Verbindungselemente der Behandlungsmittel einer Behandlungsstation können dabei unterschiedlich lang sein, so daß die Kurven auf der Trommel in unterschiedlichen Abständen von den normalerweise in gleicher Höhe befindlichen Behandlungsstationen aller Behandlungseinheiten angeordnet sein können, um so möglichst viele Kurven auf der Trommel unterbringen zu können.

In vielen Anwendungsfällen wird zweckmäßigerweise so verfahren, daß in der ersten der beiden Behandlungsstationen einer Behandlungseinheit Bereiche des Formlings oder des Zwischenerzeugnisses auf eine für die Behandlung in der zweiten Behandlungsstation erforderlichen Temperatur gebracht werden. Viele Behandlungsvorgänge werden nur dann ausgeführt werden können, wenn der Formling eine bestimmte, im allgemeinen gegenüber der Umgebung erhöhte Temperatur aufweist. Dabei ist es zur Erzielung einer ausreichenden Durchsatzleistung und auch einer übersichtlichen Anordnung der Behandlungsstationen zweckmäßig, Temperieren und beispielsweise Formgebung in einer Behandlungseinheit zu trennen derart, daß das Temperieren in der ersten Behandlungsstation, die nachfolgende, bei einer bestimmten Temperatur durchzuführende Behandlung dann in der zweiten Behandlungsstation derselben Einheit durchgeführt werden. Dies schließt natürlich nicht aus, daß im Bedarfsfall auch in einer Station, in welcher ein Temperieren des Formlings erfolgt, ggf. gleichzeitig auch andere Behandlungen am Formling durchgeführt werden und umgekehrt.

Als besonders vorteilhaft hat sich ein Anordnung herausgestellt, bei welcher die beiden Behandlungsstationen einer Behandlungseinheit in unterschiedlichen Abständen von der Längsachses des Gehäuses angeordnet sind mit der Folge, daß eine der beiden Behandlungsstationen sich beispielsweise unmittelbar am Gehäusse, die andere dagegen sich in einem geringen Abstand davon befindet. Dabei ist es zweckmäßig, jeweils die Station unmittelbar am Gehäuse anzuordnen, in welcher die die größeren Kräfte erfordernden Behandlungen am Formling durchgeführt werden, um so die Übertragungswege zwischen diese Kräfte aufbringenden Kurventrommel und Behandlungsmittel so kurz wie möglich zu halten. Im allgemeinen wird es sich bei dieser Behandlungsstation um die zweite Behandlungsstation der Behandlungseinheit handeln, da in der jeweils ersten Behandlungsstation überwiegend Temperiervorgänge durchgeführt werden, für die keine großen mechanischen Kräfte erforderlich sind. Die vorbeschriebene relative Anordnung der beiden Behandlungsstationen einer Behandlungseinheit hat auch den Vorteil, daß bei gegebenem Durchmesser eines Gehäuses eine größere Anzahl von Stationen und damit Behandlungseinheiten untergebracht werden kann als es der Fall wäre, wenn die Stationen einer Behandlungseinheit nebeneinander unmittelbar am Gehäuse mit gleichem radialem Abstand von der Längsachse des Gehäuses angeordnet wären.

Zur Erzielung einer einheitlichen Anordnung ist es dabei zweckmäßig, alle Behandlungsstationen einer Baueinheit, in denen dieselben Behandlungen an den Formlingen durchgeführt werden. auf einem gemeinsamen Kreis anzuordnen. wobei die von den behandlungsgleichen Stationen gebildeten Kreise unterschiedliche Durchmesser aufweisen und zur Längsachse des Gehäuses koaxial sind.

Gemäß einem weiteren Vorschlag der Erfindung können von wenigstens einer horizontalen Transportbahn, die unterseitig von der oberen rotierenden Ringscheibe begrenzt ist, im wesentlichen horizontal verlaufende Abzweigbahnen abgehen, deren der Transportbahn jeweils abgekehrtes Ende über einen der im wesentlichen vertikalen Transportwege angeordnet ist, durch welche der Abstand zwischen der oberen Ringscheibe und der zugehörigen Behandlungsstation oder -einheit überbrückt wird. Dabei wird so verfahren, daß die rotierende Ringscheibe die Formlinge mitnimmt und den Abzweigbahnen zuführt. Da in Anbetracht der anzustrebenden großen Durchsatzleistung und der Vielzahl der vorhandenen Behandlungsstationen oder -einheiteneine entsprechend große Anzahl von Formlingen pro Zeiteinheit durch die rotierende Ringscheibe transportiert werden muß, kann es zweckmäßig sein, daß der horizontale Bereich, in welchem die Ringscheibe umläuft, in Sektoren gleicher Größe unterteilt ist und jedem Sektor eine eigene Einrichtung für das Zuführen der Formlinge in den zugehörigen Sektor zugeordnet ist. Da die horizontale Transportbahn eines Sektors im Vergleich mit einer sich entlang der gesamten Ringscheibe erstreckenden einzigen Transportbahn eine der Anzahl der Sektoren entsprechende kürzere Erstreckung und somit auch eine entsprechend geringere Anzahl von Abzweigbahnen aufweist, kann die Ringscheibe zur Erzielung einer bestimmten Durchsatzleistung, d. h. einer bestimmten Anzahl zu transportierender Formlinge pro Zeiteinheit, mit entsprechend geringerer Geschwindigkeit umlaufen. Dies ist deshalb vorteilhaft, weil dadurch die Möglichkeit, daß Störungen beim Transport der Formlinge auftreten, merklich verringert wird. Dies gilt insbesondere deshalb, weil in der Transportbahn die Formlinge sich in unmittelbarem Kontakt miteinander befinden, wobei in Abhängigkeit von der Geschwindigkeit, mit welcher die Ringscheibe rotiert und der Geschwindigkeit, mit welcher die Formlinge oder Zwischenerzeugnisse vorbewegt werden, auf letztere ein gewisser Druck ausgeübt wird, der zu einer ungewollten Verformung der Formlinge führt, die ebenfalls Störungen verursachen kann, sei es, daß die Formlinge sich in der Transportbahn festklemmen, sei es, daß sie in eine Schräglage geraten. Mit abnehmender Transportgeschwindigkeit werden derartige Störeinflüsse stark verringert, und zwar auch dann, wenn, wie es allgemein üblich ist, die Transportbahn auf der Ringscheibe und ggf. auch die Abzweigbahnen oberhalb der Ringscheibe seitlich durch stationäre Führungselemente für die Formlinge begrenzt sind.

Wenn die Formlinge oder Zwischenerzeugnisse auf den Abzweigbahnen und ggf. auch auf der Transportbahn unmittelbar nebeneinanderstehen und einander berühren. ist es erforderlich, eine Einrichtung vorzusehen, durch welche die Formlinge in den durch den Arbeitsablauf in den Bearbeitungsstationen festgelegten Zeitabständen letzteren zugeführt werden. Dazu kann am Ende jeder Abzweigbahn oberhalb des ihr nachgeordneten vertikalen Transportweges ein die Übergabe der einzelnen Formlinge von der Abzweigbahn an den nachgeschalteten vertikalen Transportweg steuerndes Steuerglied vorgesehen sein, welches so betätigt wird, daß die Formlinge in bestimmten Zeitabständen in den vertikalen Transportweg und damit in die diesem nachgeschaltete Behandlungsstation gelangen. Der Zeittakt, mit welchem das Steuerglied die Formlinge freigibt, hängt somit ab von der Dauer der Behandlung in der nachgeordneten Behandlungsstation. Vorteilhaft kann das Steuerglied in im wesentlichen horizontaler Ebene zwischen zwei Endpositionen hin- und herbewegt werden, wobei es an seiner der Transportbahn zugekehrten Seite mit einer Randausnehmung versehen ist, deren Querschnittsabmessungen den Querschnittsabmessungen des zu transportierenden Formlings angepaßt sind, und die Randausnehmung in der einen Endposition des Steuerelementes eine Fortsetzung der Abzweigbahn bildet und in seiner anderen Endposition sich oberhalb des vertikalen Transportweges etwa in Verlängerung desselben befindet. Dabei ist vorteilhaft die Anordnung so getroffen, daß im Bedarfsfall einzelne Steuerglieder unabhängig von den übrigen Steuergliedern abgeschaltet werden können, so daß beispielsweise bei einer Störung in einer der Behandlungseinheiten einer Baueinheit diese Behandlungseinheit durch Abschalten des Steuerelementes nicht mehr mit Formlingen beschickt wird, ohne daß die Notwendigkeit besteht, auch die Zufuhr zu den anderen Behandlungsstationen der Baueinheit zu unterbrechen. Im Bedarfsfall besteht sogar die Möglichkeit, nur eine der Behandlungsstationen oder -einheiten der Baueinheit mit Formlingen zu beschicken, d. h., die Steuerelemente aller anderen Behandlungseinheiten unwirksam zu stellen. Eine solche Maßnahme kann z. B. dann zweckmäßig sein, wenn Versuche durchgeführt werden.

Die Geschwindigkeit, mit welcher die Formlinge in der unterseitig durch die Ringscheibe begrenzten horizontalen Transportbahn vortransportiert werden, stimmt im Normalfall nicht überein mit der Geschwindigkeit mit welcher die Ringscheibe umläuft. Dies gilt in jedem Fall für den Vortransport der Formlinge in den Abzweigbahnen, da die Transportrichtung in diesen Abzweigbahnen nicht mit der Umlaufrichtung der Ringscheibe übereinstimmt. Zur Erzielung günstiger Reibungsverhältnisse ist es zweckmäßig, daß wenigstens die die Formlinge tragende Fläche der Ringscheibe aus Glas besteht. Dies gilt auch für die Ringscheibe am unteren Ende der Baueinheit, durch welche die Formlinge nach an ihnen erfolgter Bearbeitung transportiert werden.

Wenn die Vorrichtung gemäß der Erfindung zum Herstellen von Hohlkörpern aus thermoplastischem Kunststoff unter Anwendung eines Verfahrens benutzt wird, bei welchem ein Formling unterhalb der Glasumwandlungstemperatur gestreckt verringerung erfährt und an das freie Ende ein Bördelrand wird, ist es vorteilhaft, die Anordnung so zu treffen, daß jeweils die Station zum Temperieren des Formlings auf eine Temperatur unterhalb der Glasumwandlungstemperatur und die Station zum anschließenden Strecken des Formlings jeweils eine Behandlungseinheit bilden und mehrere dieser Behandlungseinheiten zu einer Baueinheit zusammengefaßt sind.

Wenn die Vorrichtung unter Anwendung eines Verfahrens benutzt wird, bei welchem ein Formling an dem seine Öffnung begrenzenden Bereich voraufgeweitet und ausgehend von diesem voraufgeweiteten Ende auf einen größeren Durchmesser aufgeweitet wird, kann die Anordnung so getroffen sein, daß jeweils die Station zum Voraufweiten des freien Endes des gestreckten Formlins und die Station zum anschließenden weiteren Aufweiten des Formlings zu seinem Enddurchmesser und Thermofixieren desselben jeweils eine Behandlungseinheit bilden, wobei mehrere dieser Behandlungseinheiten zu einer Baueinheit zusammengefaßt sind.

Wenn die Vorrichtung unter Anwendung eines Verfahrens benutzt wird, bei welchem der an die Öffnung angrenzende Wandbereich des Formlings eine Duchmesserverringerung erfährt und an das freie Ende ein Bördelrand angeformt wird, ist die Anordnung zweckmäßig so getroffen, daß jeweils die Station zum Verengen des Endbereiches und die Station zum anschließenden Anbringen eines Bördelrandes am Zwischenerzeugnis eine Behandlungseinheit bilden, wobei mehrere dieser Behandlungseinheiten zu einer Baueinheit zusammengefaßt sind.

Die vorstehend beschriebene Anordnung weist den Vorteil auf, daß in jeder Baueinheit jeweils die Stationen zu einer Behandlungseinheit zusammengefaßt sind, in denen in einem kurzen zeitlichen Abstand aufeinanderfolgende Behandlungsschritte durchgeführt werden. Dies kann z. B. in der Weise geschehen, daß in einer Baueinheit in der ersten Station einer Behandlungseinheit zumindest Teilbereiche des Formlinges temperiert werden und in der zugehörigen zweiten Behandlungsstation der Behandlungseinheit Formgebungsvorgänge durchgeführt werden, für die die beim vorangegangenen Temperiervorgang eingestellte Temperatur erforderlich oder doch zumindest, beispielsweise zur Erzielung einer ausreichend großen Durchsatzleistung, zweckmäßig ist. Die Zusammenfassung von wenigstens zwei Stationen zu einer Behandlungseinheit ermöglicht es somit, die notwendigen Behandlungsschritte insbesondere unter Berücksichtigung der an die Qualität des Enderzeugnisses zu stellenden Anforderungen durchzuführen. Ein weiterer Vorteil der erfindungsgemäßen Anordnung besteht darin, daß die unterschiedlichen Behandlungszeiten in den Behandlungseinheiten der einzelnen Baueinheiten ausgeglichen werden können derart, daß die Behandlungseinheiten mit längerer Behandlungsdauer in entsprechend größerer Anzahl vorgesehen sind. Dies kann in der Weise geschehen, daß die Baueinheit, in deren Behandlungsstationen eine längere Behandlungsdauer erforderlich ist, mit einer entsprechend größeren Anzahl von Behandlungsstationen oder -einheiten längeren Behandlungsdauer mit einer entsprechend größeren Anzahl von Behandlungsstationen oder -einheiten versehen ist. Andererseits besteht aber auch die Möglichkeit, die Anzahl der Baueinheiten für eine bestimmte Behandlungsfolge entsprechend der Behandlungsdauer zu bemessen. Dies bedeutet, daß z. B. mehr Baueinheiten für jene Behandlungsstationen vorgesehen sind, in denen die Behandlungsdauer länger ist als in anderen Baueinheiten. Dies hat den Vorteil, daß für alle Baueinheiten der gleiche Grundaufbau vorgesehen sein kann, beispielsweise bezüglich der Anzahl der Behandlungsstationen bzw. der Behandlungseinheiten und somit auch für den Durchmesser von Gehäuse, Kurventrommel usw. Welche der beiden Möglichkeiten zweckmäßiger ist, wird von den Gegebenheiten des jeweiligen Einzelfalles abhängen. Jedenfalls ermöglicht die Erfindung eine gewisse Anpassung an die jeweiligen Gegebenheiten derart, daß nicht die Behandlungsstation mit der längsten Behandlungsdauer die Durchsatzleistung der gesamten Vorrichtung bestimmt.

Ein weiterer Aspekt bei der Unterteilung der Baueinheiten bzw. der Zuammenfassung der Behandlungsstationen jeweils einer Behandlungseinheit kann auch darin bestehen, daß die Formlinge bei Verlassen der jeweiligen Baueinheit eine Gestalt aufweisen, die für ihren freien Transport günstig ist, insbesondere auf der umlaufenden Ringscheibe im unteren Bereich der Baueinheit, in welcher die Behandlungen durchgeführt worden sind, und ggf. auch auf der umlaufenden Ringscheibe im oberen Bereich einer ggf. nachgeschalteten Baueinheit für die Durchführung weiterer Behandlungen an den Formlingen. Hierbei ist zu berücksichtigen, daß die Formlinge zumindest auf Teilbereichen sehr dünnwandig sein können und zudem eine Querschnittsform aufweisen sollten, die es erlaubt, die Formlinge in den Transportbahnen in unmittelbarer Berührung miteinander durch die Ringscheiben frei vorzutransportieren, ohne daß es dabei zu Störungen kommt. "Frei vorzutransportieren" bedeutet dabei, daß der Formling während des Transports nicht von irgendwelchen Mitteln, z. B. Greifer, gehalten wird, sondern durch die Bewegung des ihn tragenden Bodens transportiert wird.

So sollten die Formlinge beim Transport zwischen den Baueinheiten nach Möglichkeit keine seitlichen Vorsprünge, z. B. nach außen vorstehende Flansche am freien Ende aufweisen, da diese zur Schrägstellung der Formlinge und damit zu Störungen beim Transport führen können. Der Abstand zwischen den einzelnen Baueinheiten kann zur Durchführung aufeinanderfolgender Behandlungsschritte durch Transportmittel überbrückt werden. Dabei besteht die Möglichkeit, zwischen den Baueinheiten Arbeitsstationen zur Zwischenbehandlung, insbesondere zum Entfernen von Überschußmaterial, vorzusehen.

Wenn vorstehend und im folgenden Teil der Beschreibung von "Formlingen" die Rede ist, dann sind damit die zu bearbeitenden Hohlkörper gemeint, und zwar unabhängig von ihrer jeweiligen Gestalt und dem Bearbeitungszustand.

In der Zeichnung ist als Ausführungsbeispiel der Erfindung eine Vorrichtung zum Herstellen von Dosen dargestellt, wobei die Behandlungsstationen auf drei in Transportrichtung der Formlinge hintereinander gefaltete Baueinheiten aufgeteilt sind. Es zeigen:

Fig. 1 im Schema mehrere in Transportrichtung der zu behandelnden Formlinge hintereinandergeschaltete Baueinheiten, in perspektivischer Ansicht,

Fig. 2 im Schema den Transportverlauf eines Formlinges durch drei hintereinandergeschalteten Baueinheiten gemäß Fig. 1,

Fig. 3 im Schema die Seitenansicht einer Baueinheit, wobei zur Erzielung einer besseren Übersicht nur einige der Behandlungsstationen dargestellt sind,

Fig. 4 eine Ansicht in Richtung der Pfeile IV-IV der Fig. 3,

Fig. 5 im Schema die perspektivische Ansicht einer innerhalb des stationären Gehäuses angeordneten Kurventrommel,

Fig. 6 im Schema die perspektivische Ansicht eines Gehäuses ohne zusätzliche Teile,

Fig. 7 eine Draufsicht in Richtung des Pfeiles VII der Fig. 3,

Fig. 8 eine Einzelheit aus Fig. 7 in größerem Maßstab,

Fig. 9 im Schema die Ansicht einer Behandlungseinheit in Richtung des Pfeiles IX der Fig. 3,

Fig. 10 eine Ansicht in Richtung der Pfeile X-X der Fig. 9 der einer Behandlungseinheit zugeordneten Transporteinrichtung,

Fig. 11 einen Ausschnitt aus einem Längsschnitt durch Gehäuse, Kurventrommel mit Werkzeugen einer Behandlungsstation,

Fig. 12 eine der Fig. 1 entsprechende Darstellung einer anderen Anordnung der Baueinheiten.

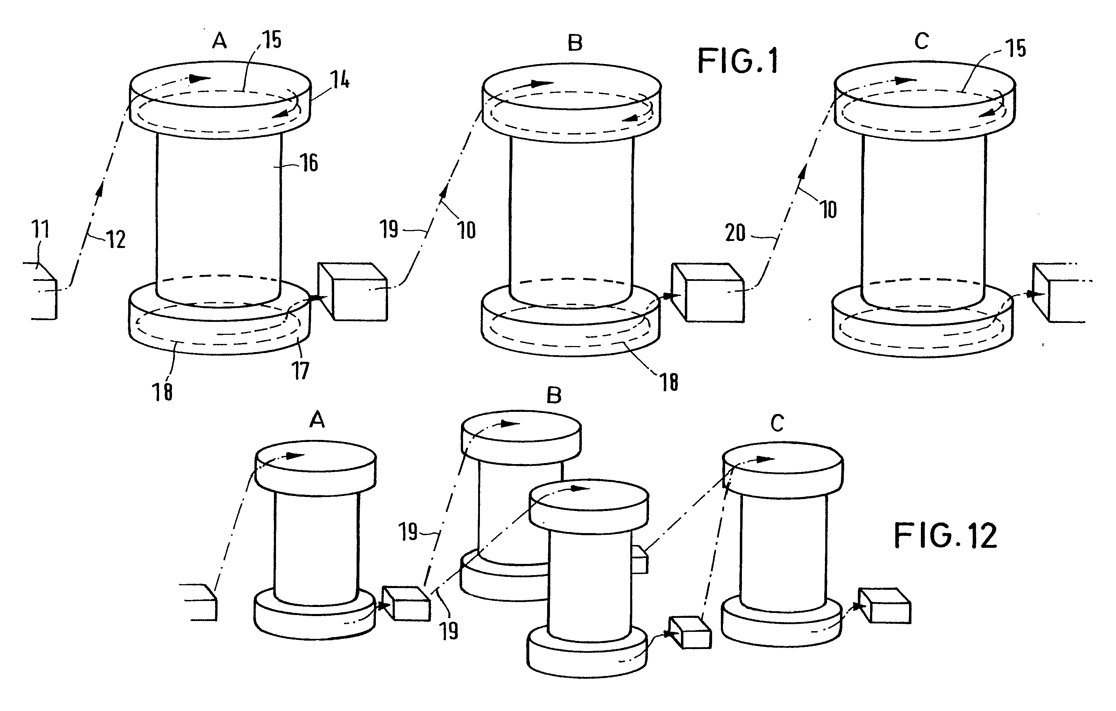

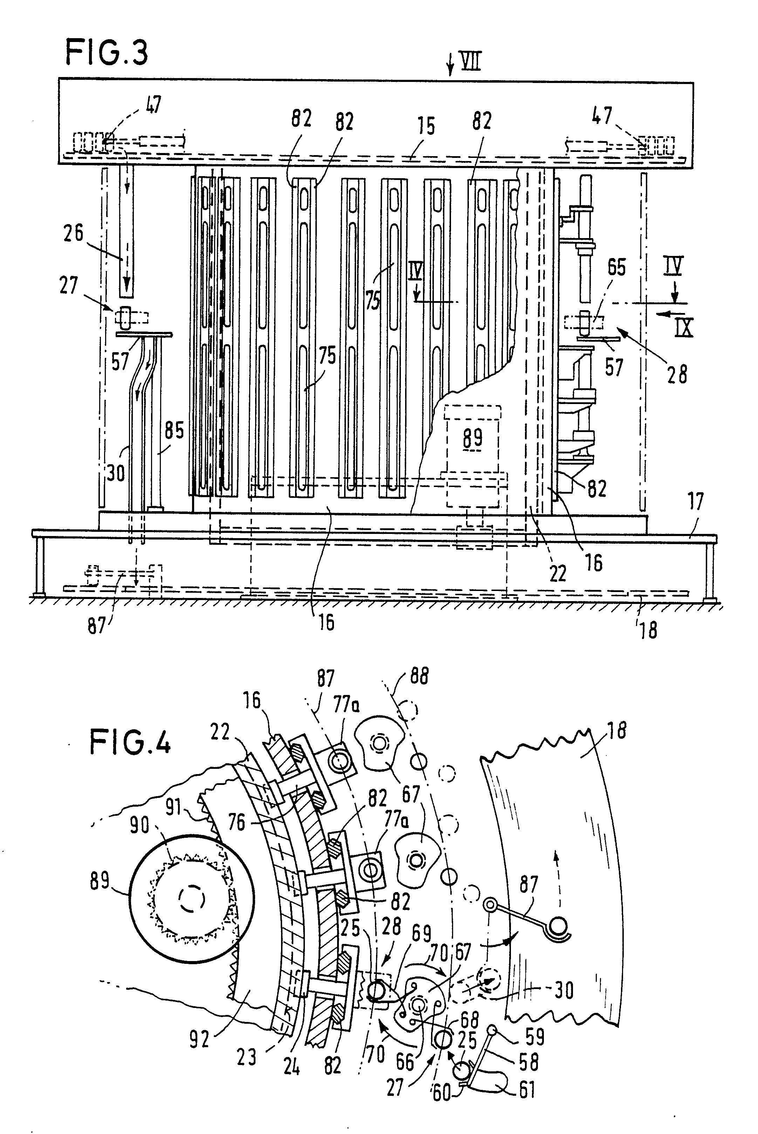

Die in Fig. 1 der Zeichnung dargestellten drei Baueinheiten A bis C sind in Transportrichtung 10 der zu behandelnden Formlinge hintereinandergeschaltet. Die Formlinge werden aus einer geeigneten Einrichtung 11, die beispielsweise einen Vorrat an Formlingen aufweist, über eine geeignete Fördereinrichtung 12 dem oberen Bereich 14 der in Transportrichtung 10 ersten Baueinheit A aufgegeben. Dieser obere Bereich weist eine in horizontaler Ebene angeordnete, Ringscheibe 15 (Fig. 3, 7, 8) auf, die um eine vertikale Achse rotierbar ist.

Die von der Einrichtung 11 kommenden Formlinge werden von der Fördereinrichtung 12 in noch zu beschreibender Weise auf diese rotierende Ringscheibe 15 gebracht.

Unterhalb des oberen Bereiches 14 ist ein im wesentlichen zylindrisches oder im Querschnitt vieleckiges Gehäuse 16 koaxial zur Rotationsachse der Ringscheibe 15 angeordnet. Das Gehäuse ist unterseitig von einer etwa kreisförmigen Basis 17 umgeben, in der eine zweite Ringscheibe 18 koaxial zur oberen Ringscheibe 15 und zum stationären Gehäuse 16 angeordnet ist.

Alle Baueinheiten A, B und C weisen den gleichen, vorbeschriebenen Grundaufbau auf. Die Baueinheiten A und B sowie B und C sind durch Fördereinrichtungen 19 bzw. 20 miteinander verbunden, wobei jeweils die eine Baueinheit unten über die jeweils zugeordnete Ringscheibe 18 verlassenden Formlinge der nachgeschalteten Baueinheit in deren oberen Bereich auf die dort befindliche obere Ringscheibe 15 zugeführt werden.

Die Behandlungsstationen zur Behandlung der Formlinge in den einzelnen Baueinheiten sind außenseitig um das stationäre Gehäuse 16 in gleichen horizontalen Abständen voneinander angeordnet. Die Anzahl der so um den Umfang des Gehäuses anzubringenden Behandlungsstationen hängt von deren Platzbedarf sowie dem Durchmesser des Gehäuses 16 ab.

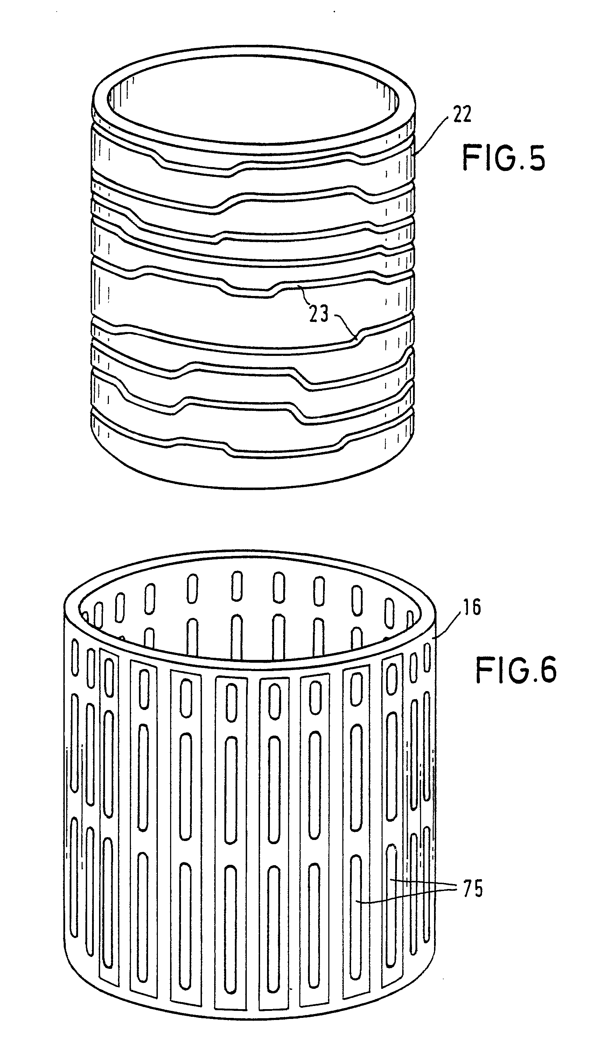

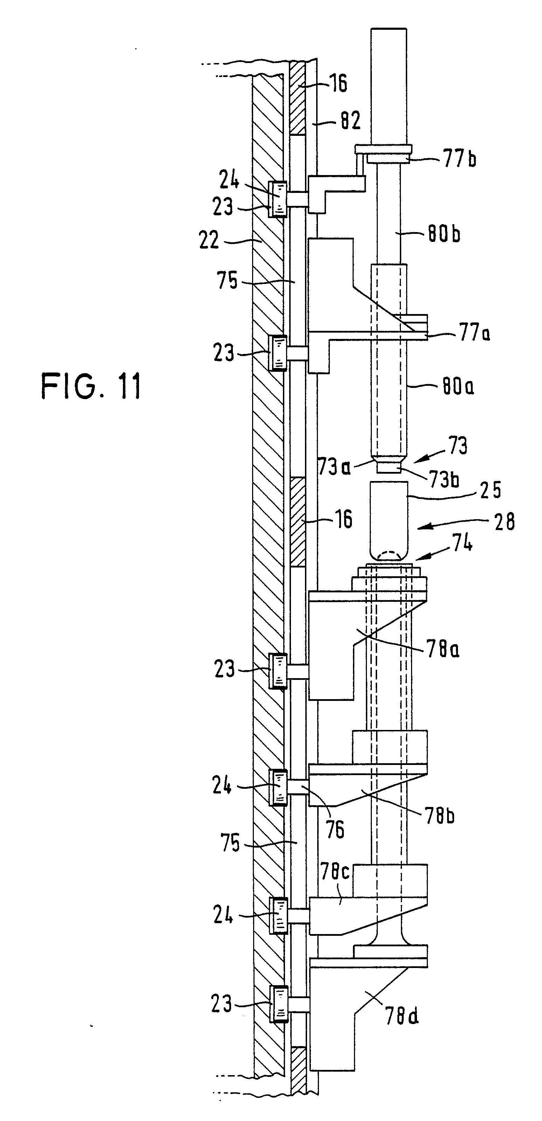

Die Betätigung wenigstens eines Teils der Werkzeuge oder anderer Mittel zur Durchführung der Behandlungen an den Formlingen in den einzelnen Behandlungsstationen erfolgt durch eine Kurventrommel 22 (Fig. 5), die koaxial zum Gehäuse 16 innerhalb desselben um eine vertikale Achse rotiert, die mit den Rotationsachsen von oberer Ringscheibe und unterer Ringscheibe 15 bzw. 18 zusammenfällt. Die Kurventrommel 22 ist außenseitig mit umlaufenden Kurven 23 versehen, die mit Kurvenrollen 24 (Fig. 11) zusammenwirken. Letztere sind in noch zu beschreibender Weise mit den Werkzeugen verbunden.

Diejenigen Behandlungsstationen, die von jedem Formling zwecks Durchführung der in der jeweiligen Baueinheit an ihm vorzunehmenden Behandlungsschritte durchlaufen werden, sind zu Behandlungseinheiten zusammengefaßt. Alle Behandlungseinheiten einer der Baueinheiten A bis C sind in gleicher Weise ausgebildet, so daß in allen Behandlungseinheiten einer Baueinheit die gleichen Formlinge in gleicher Weise behandelt werden. Mithin hängt die Durchsatzleistung jeder Baueinheit bei einer bestimmten Behandlungszeit pro Formling in einer Behandlungseinheit von der Anzahl der Behandlungseinheiten ab, die an einer Baueinheit angebracht sind.

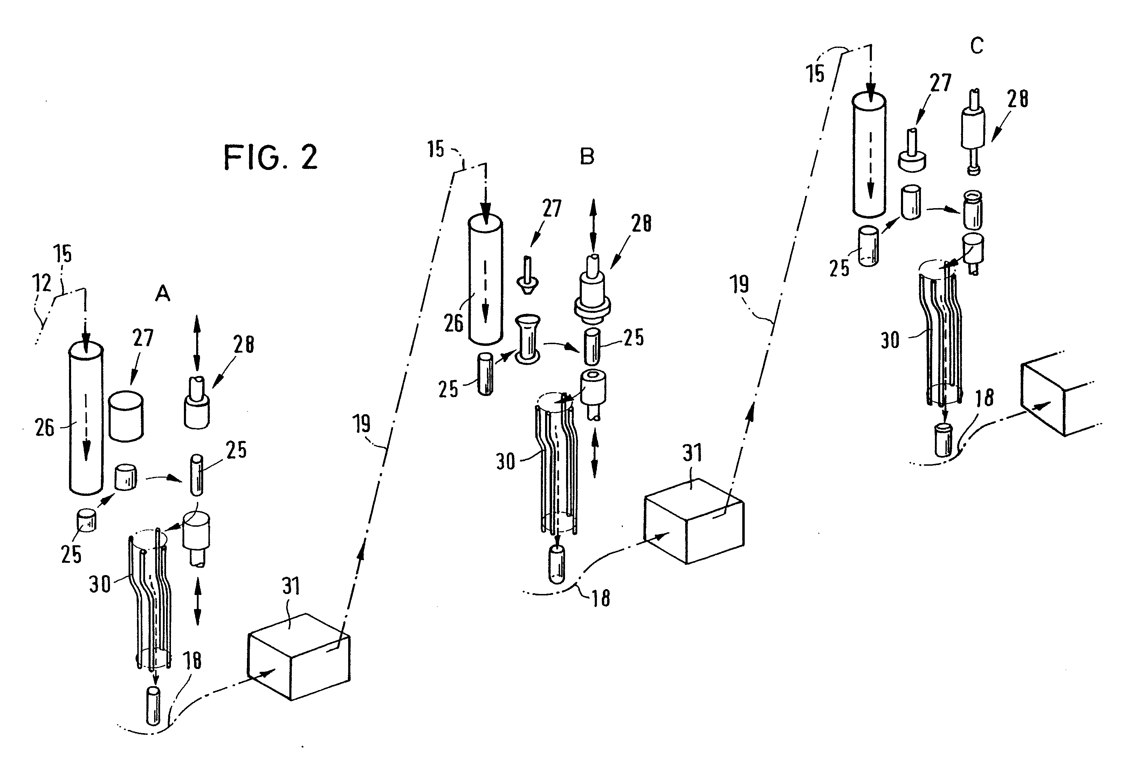

Fig. 2 läßt erkennen, daß jeder Formling alle Behandlungseinheiten A - C in im Prinzip gleicher Weise durchläuft. Der Formling gelangt zunächst von der oberen Ringscheibe 15 in noch zu beschreibender Weise in einen im wesentlichen vertikal verlaufenden Schacht 26, dessen Innendurchmesser dem Außendurchmesser des Formlings 25 angepaßt ist. Der Schacht 26, durch den der Formling nach unten fällt, endet etwa auf halber Höhe des Gehäuses 16 seitlich neben der ersten Behandlungsstation 27 der dem jeweiligen Schacht 26 zugeordneten Behandlungseinheit. Aus dem Schacht 26 wird der Formling 25 durch noch zu beschreibende Transportmittel in die erste Behandlungsstation 27 verschoben, in der er eine erste Behandlung erfährt, in der Baueinheit A z. B. temperiert wird. Nach Beendigung der Behandlung in dieser ersten Behandlungsstation 27 wird der Formling 25 dann in eine daneben befindliche zweite Behandlungsstation 28 gebracht, in welcher er beispielsweise einer Verformung unterzogen wird, bei der es sich in der Baueinheit A um einem Ziehvorgang handeln kann, durch welchen seine Wandung unter Vergrößerung der Länge des Formlings eine Streckung erfährt. Der so bearbeitete Formling 25 wird nach Beendigung der Behandlung in der zweiten Behandlungsstation 28 wiederum durch eine im wesentlichen horizontale Transportbewegung über die obere Öffnung eines zweiten Förderschachtes 30 transportiert und dann freigegeben, so daß es durch den Schacht 30 nach unten in den Bereich der unteren Ringscheibe 18 fällt. Der untere Förderschacht 30 verläuft nicht genau vertikal, er ist vielmehr etwas gekrümmt ausgeführt ist, um den Formling 25 in den Bereich der unteren Ringscheibe oder nahe an diese zu bringen, die aus Gründen der besseren Zugänglichkeit einen etwas größeren Durchmesser aufweist. Der untere Förderschacht 30 besteht aus mehreren käfigartig angeordneten Stäben oder Drähten. Er kann aber auch aus einem Rohr bestehen. Der Schacht 26 kann andererseits auch käfigartig aus Stäben oder Drähten aufgebaut sein.

Von der jeweils unteren Ringscheibe 18 wird der Formling 25 über geeignete Fördereinrichtungen 19 in die jeweils nachgeschaltete Baueinheit B bzw. C gebracht, um dort weitere Behandlungsvorgänge an dem Zwischenerzeugnis durchzuführen. Zwischen den Baueinheiten I bis III können Einrichtungen 31 angeordnet sein, in denen an den Formlingen bzw. den daraus hergestellten Zwischenerzeugnissen zusätzliche Bearbeitungsvorgänge, z. B. Schneidvorgänge durchgeführt werden können. Die Einrichtungen 31 können auch dazu dienen, einen Vorrat der Formlinge bzw. Zwischenerzeugnisse zu bilden, aus dem diese zur jeweils folgenden Baueinheit geführt werden.

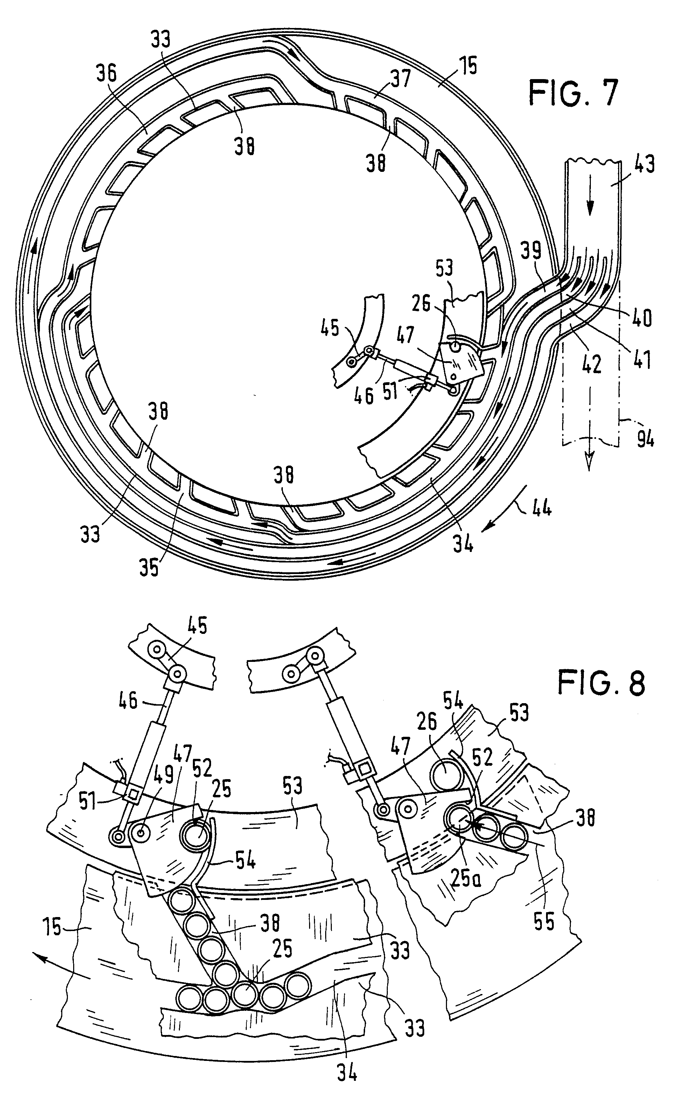

Fig. 7 und 8 lassen erkennen, daß der oberen Ringscheibe 15 oberhalb derselben angeordnete, stationäre Führungsmittel 33 für die Formlinge 25 zugeordnet sind. Die Führungsmittel können Bleche, Drähte oder dgl. sein. Sie sind derart angeordnet, daß sie einen Abstand voneinander aufweisen, der geringfügig größer ist als der größte Außendurchmesser der Formlinge 25 und so mit der Oberseite der Ringscheibe 15 jeweils eine Transportbahn begrenzen, entlang welcher die Formlinge 25 vorbewegt werden. Es sind vier zur Drehachse der Ringscheibe 15 koaxiale Transportbahnen 34, 35, 36, 37 für die Formlinge 25 vorhanden, von denen jede jeweils einem Viertel des Kreises zugeordnet ist, der von der oberen Ringscheibe 15 durchlaufen wird. Von jeder dieser somit einen Viertelkreis beschreibenden Transportbahnen 34 bis 37 gehen nach innen Abzweigbahnen 38 ab, die, wie insbesondere Fig. 8 erkennen läßt, an ihrem der jeweils zugehörige Transportbahn abgekehrten Ende über einem der vertikalen Förderschächte 26 enden, durch die die Verbindung zwischen der im oberen Bereich der jeweiligen Baueinheiten befindlichen Zuführung, insbesondere also der Ringscheibe 15, und der dem jeweiligen Schacht zugeordneten Behandlungseinheit hergestellt wird. Bei dem in Fig. 7 dargestellten Ausführungsbeispiel ist jeder Viertelkreis mit sechs Abzweigungen 38 versehen, so daß, da jeder Behandlungseinheit eine Abzweigung zugeordnet ist, die Baueinheit 24 Behandlungseinheiten aufweist.

Jeder Viertelkreis-Transportbahn 34 bis 37 ist eine besondere Zuführungsbahn für die zu behandelnden Formlinge 25 vorgeschaltet, so daß insgesamt vier Zuführungsbahnen 39, 40, 41 und 42 vorgesehen sind. Bei dem in der Zeichnung, insbesondere Fig. 7, dargestellten Ausführungsbeispiel werden sämtliche Zuführungsbahnen 39 bis 42 von einer geeinsamen Haupt-Zuführungsbahn 43 beschickt, von denen die einzelnen Zuführungsbahnen 39 bis 42 in der in Fig. 7 der Zeichnung dargestellten Weise abgehen. Diese Anordnung hat zur Folge, daß die Zuführungsbahnen 39 bis 42 unterschiedlich lang sind, weil sie auf Teilen ihrer Längserstreckung zueinander parallel und somit koaxial zueinander und zur Drehachse der Ringscheibe 15 verlaufen. Mithin hat die Zuführungsbahn 42 für die in Transportrichtung 44 der Formlinge auf der Ringscheibe 15 am weitesten hinten liegende Viertelkreis-Transportbahn 37 die größte Länge, die sich über etwa dreiviertel des Gesamtkreises erstreckt. Entsprechend kürzer sind die Zuführungsbahnen 41, 40 und 39 für die anderen Viertelkreis-Transportbahnen 36', 35 und 34. Dies ist jedoch für die Beschickung der einzelnen Transportbahnen mit den Formlingen ohne Belang, da unter der Voraussetzung, daß jeweils genügend Formlinge über die Haupt-Zuführungsbahn 43 zugeführt werden, die Verteilung auf die einzelnen Zuführungsbahnen 39 bis 42 selbsttätig erfolgt, wobei die Drehgeschwindigkeit der Ringscheibe 15 in Richtung des Pfeiles 44 größer ist als die Geschwindigkeit, mit welcher die Formlinge in den einzelnen Zuführungsbahnen 39 bis 42 und den einzelnen Transportbahn 34 bis 37 vorbewegt werden. Die Haupt-Zuführungsbahn 43 ist jeweils den Fördereinrichtungen 12, 19, 20 nachgeordnet, die die Formling auf das Niveau der jeweiligen Ringscheibe 15 transportieren.

Selbstverständlich kann die Anordnung auch so getroffen sein, daß die Haupt-Zuführungsbahn 43 entfällt und jeder Transportbahn 34 bis 37 eine Zuführungsbahn zugeordnet ist, die von den übrigen Zuführungsbahnen auch räumlich getrennt ist. Dies kann z. B. in der Weise geschehen, daß die einzelnen Zuführungsbahnen etwa radial verlaufend mit dem Anfangsbereich der einzelnen Transportbahnen verbunden sind. Dies hätte jedoch einen zusätzlichen Aufwand zur Folge. Die in Fig. 7 der Zeichnung dargestellte Ausführung erlaubt es, den Transport der Formlinge auch im Bereich der Zuführungsbahnen 39 bis 42 durch die Ringscheibe 15 zu bewirken, die dazu lediglich eine etwas größere radiale Erstreckung aufweisen muß. - In Fig. 7 sind die Transportbahnen 34 - 37 der Einfachheit halber als Kreisbogenabschnitte dargestellt. Tatsächlich haben die Transportbahnen 34 - 37 gemäß Darstellung der Fig. 8 einen vom Kreisbogen etwas abweichenden Verlauf, um das Einlaufen der Formlinge in die Abzweigbahnen 38 zu erleichtern.

Es war bereits erwähnt worden, daß die Formlinge durch jede der einzelnen Abzweigungen 38 einem der Schächte 26 zugeführt werden. Da die Behandlung der Formlinge in den einzelnen Behandlungsstationen 27, 28 eine bestimmte Zeit dauert, müssen die Formlinge demzufolge durch die Schächte in bestimmten Zeitabständen zugeführt werden, die der Behandlungsdauer in den Behandlungsstationen bzw. den von diesen gebildeten Behandlungseinheiten angepaßt sind. Da die Ringscheibe 15 mit größerer Geschwindigkeit umläuft als der Geschwindigkeit entspricht, mit welcher die Formlinge in den Zuführungsbahnen 39 und 42, den Transportbahnen 34 bis 37 und den Abzweigungen 38 vorbewegt werden, bildet sich in den Zuführungsbahnen, Transportbahnen und Abzweigungen ein Stau von Formlingen. D. h., daß diese durch die kontinuierlich rotierende Ringscheibe 15 gegeneinander gedrückt werden und somit ständig unter der Einwirkung einer Kraft stehen, die die Formlinge entlang den Transportbahnen und von diesen in die Abzweigungen 38 zu verschieben sucht. Um ein unkontrolliertes Austreten der Formlinge aus den Abzweigungen 38 zu verhindern, ist jede Abzweigung 38 an ihrem der jeweils zugehörigen Transportbahn 34 bis 37 abgekehrten Ende mit einem Steuerglied 47 versehen, welches zwischen zwei Endlagen hin- und herschwenkbar ist. In Fig. 8 ist links die eine Endlage und rechts die andere Endlage dargestellt. Jedes Steuerglied 47 besteht bei dem in der Zeichnung dargestellten Ausführungsbeispiel aus wenigstens einem etwa dreieckförmigen flächigen Element, welches um eine vertikale Achse 49 zwischen den beiden Endstellungen schwenkbar ist. Dazu ist jedes Steuerglied 47 über geeignete Verbindungselemente 45, 46 mit einer Kurve der Kurventrommel 22 verbunden, wobei in die diese Bewegung übertragende Anordnung ein Kupplungselement 51 eingeschaltet ist, welches das Steuerglied 47 stillzusetzen ermöglicht. Das Steuerglied 47 ist an seiner der jeweils zugehörigen Abzweigung zugekehrten Seite mit einer Ausnehmung 52 versehen, deren Querschnittsabmessungen den Querschnittsabmessungen des Formlings 25 angepaßt ist. In Verlängerung jeder Abzweigung 38, die sich noch im Bereich der Ringscheibe 15 befindet, ist im Niveau der Ringscheibe 15 ein stationärer Boden 53 in Form eines Rings angeordnet, der den Abstand zwischen der inneren Begrenzung der Ringscheibe 15 und dem der jeweiligen Abzweigung 38 nachgeordneten vertikalen Förderschacht 26 überbrückt, dessen obere Öffnung in der Ebene des Ringes 53 liegt. Jedem Steuerglied 47 ist eine seitliche Führung 54 zugeordnet, die an dem die jeweilige Transportbahn bzw. die Abzweigung begrenzenden Führungen angebracht ist und ebenfalls den Abstand zwischen Ringscheibe 15 und dem vertikalen Förderschacht 26 überbrückt.

In der rechts in Fig. 8 dargestellten Endlage des Steuergliedes 47 befindet sich dessen Ausnehmung 52 in einer Lage, in welcher sie eine Verlängerung der zugehörigen Abzweigung 38 bildet, so daß aus der Abzweigung 38 der in Förderrichtung 55 vorne befindliche Formling 25a unter der Einwirkung der durch die rotierende Ringscheibe 15 auf die Formlinge übertragene Kraft in die Ausnehmung 52 einge schoben wird und dann die rechts in Fig. 8 dargestellte Lage einnimmt, in welcher sich der Formling zumindest mit einem wesentlichen Teil seiner Bodenfläche bereits außerhalb des Bewegungsbereiches der Ringscheibe 15 befinden kann. Danach wird zu einem bestimmten Zeitpunkt, der von der Dauer der Behandlung der Formlinge in den Behandlungsstationen abhängt, das Steuerglied 47 durch die sämtlichen Steuerglieder 47 einer Baueinheit zugeordnete Kurve der Kurventrommel 22 in die links in Fig. 8 dargestellte zweite Endlage verschoben, in welcher sich die Ausnehmung 52 und damit der vom Steuerglied 47 mitgenommene Formling 25a oberhalb des Schachtes 26 befindet und somit am Ende dieser Schwenkbewegung in diesen Schacht hineinfällt. Die Führung 54 ist so geformt, daß sie während der Schwenkbewegung des Steuergliedes 47 den Formling 25a in seiner Lage innerhalb der Ausnehmung 52 hält, so daß in jedem Fall am Ende der Schwenkbewegung die richtige Position des Formlinges 25a relativ zur Öffnung des Schachtes 26 gewährleistet ist.

In Abhängigkeit von der axialen Erstreckung der Formlinge, also deren Höhe, kann das Steuerglied 47 aus zwei oder mehr in Abständen übereinander angeordneten Blechen oder dgl., die fest miteinander verbunden sind, bestehen, um in jedem Fall eine einwandfreie Mitnahme und Führung des Formlings zu erreichen.

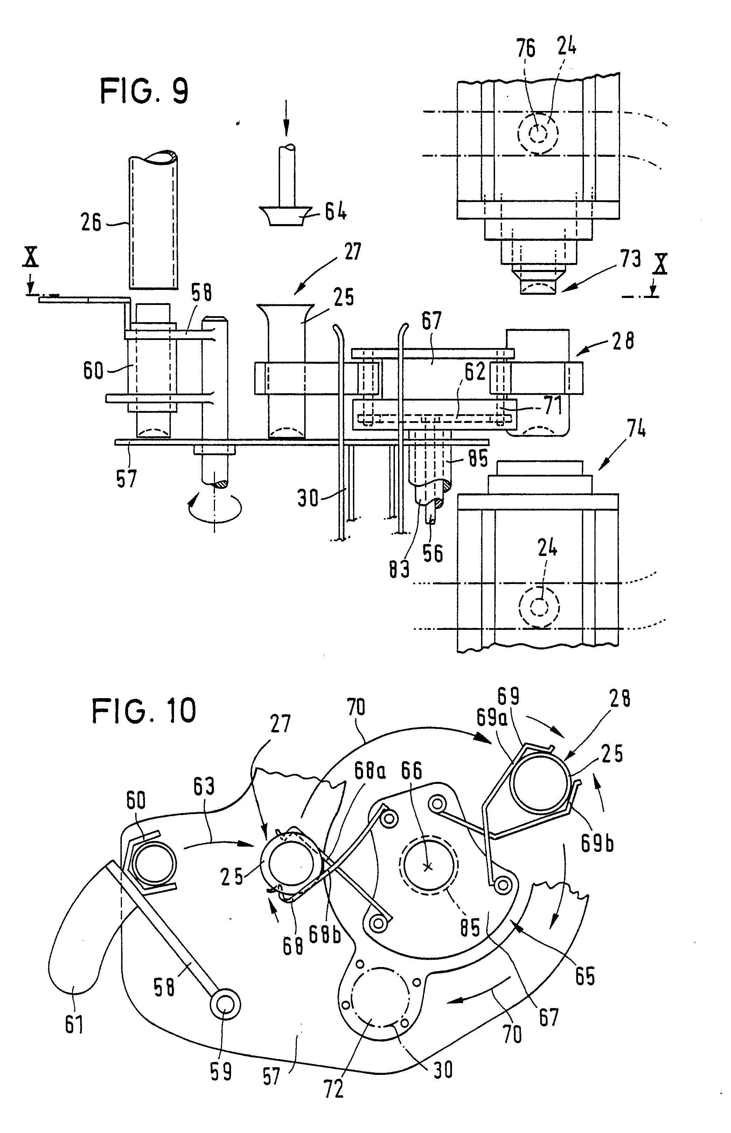

In den Figuren 9 und 10 sind Einzelheiten des Transports der Formlinge innerhalb jeder Behandlungseinheit dargestellt. Bei der Erläuterung der Fig. 2 war angenommen worden, daß in der Baueinheit ein Formling nach in der ersten Station 27 erfolgtem Temperieren in der zweiten Station 28 der Behandlungseinheit eine Streckung erfährt. Das so bearbeitete Formling 25 wird nach Verlassen der Baueinheit A zur Durchführung weiterer Behandlungsschritte der Baueinheit B zugeführt. Die Figuren 9 und 10 zeigen im Schema eine Behandlungseinheit der Baueinheit BI mit zugehöriger Transporteinrichtungen. Da die Baueinheiten B und C in gleicher Weise ausgebildet sind wie die Baueinheit A, ist im oberen Bereich ebenfalls eine rotierbare Ringscheibe 15 vorhanden, durch welche die Formlinge über Abzweigungen 38 und im wesentlichen vertikale Transportschächte 26, den einzelnen Behandlungseinheiten zugeführt werden. Es sind auch die unteren Förderschächte 30 und die im unteren Bereich der Baueinheit angeordnete zweite Ringscheibe 18 für den Abtransport der Formlinge nach deren Behandlung in der Baueinheit B vorhanden.

Die Unterschiede zwischen den einzelnen Baueinheiten betreffen somit im wesentlichen die Ausgestaltung der Behandlungsstationen, insbesondere die Mittel und Werkzeuge zum Behandeln der Formlinge sowie die Dimensionen der Transportmittel zwecks Anpassung an die Abmessungen der Formlinge in den einzelnen Baueinheiten, woei die Formlinge innerhalb einer Baueinheit Änderungen ihrer Abmessungen erfahren. Die Behandlungsmittel sind in Abhängigkeit von den jeweils an den Formlingen bzw. Zwischenerzeugnissen durchzuführenden Behandlungen ausgebildet.

Fig. 9 läßt erkennen, daß der obere Förderschacht 26 jeder Behandlungseinheit neben der ersten Behandlungsstation 27 mündet, und zwar an der der zweiten Behandlungsstation 28 abgekehrten Seite der ersten Behandlungsstation 27. Unterhalb des freien Endes des Förderschachtes 26 in einem Abstand von diesem, der etwas größer ist als der jeweiligen maximalen Längserstreckung des Formlings 25 entspricht, ist eine Bodenplatte 57 angeordnet. Zwischen dem Bereich unterhalb des Förderschachtes 26 und der ersten Behandlungsstation 27 ist ein Transportarm 58 um eine vertikale Achse 59 hin-und herschwenkbar angeordnet. An diesem Transportarm 58 ist nahe dessen freiem Ende eine Aufnahme 60 angebracht, die an einer Seite offen und im übrigen der jeweiligen Querschnittsform des Formlinges angepaßt ist. Weiterhin ist der Schwenkarm 58 mit einem im wesentlichen in horizontaler Ebene verlaufenden Fortsatz 61 versehen, der in einem geringen vertikalen Abstand vom unteren Ende des Schachtes 26 verläuft. Der Transportarm 58 ist zwischen zwei Endstellungen hin-und herschwenkbar, von denen jene in den Fig. 4, 9 und 10 dargestellt ist, in welcher sich die Aufnahme 60 für den Formling 25 unterhalb des Schachtes 26 mit diesem fluchtend befindet, so daß ein aus dem Schacht 26 nach unten sich bewegender Formling 25 beim Auftreffen auf der Bodenplatte 57 sich zwangsläufig in der Aufnahme 60 befindet. In die andere Endlage wird der Transportarm 58 in Richtung des Pfeiles 63 verschwenkt. Diese Endlage entspricht der axialen Position des Formlings in der ersten Behandlungsstation 27. Im Zuge der Verschwenkung in Richtung des Pfeiles 63 wird der Fortsatz 61 in eine Position verschwenkt, in der sich sein der Halterung 60 abgekehrter Endbereich kurz unterhalb dem unteren Ende des Schachtes 26 befindet, so daß bei in der ersten Behandlungsstation 27 befindlicher Halterung des Transportarmes 58 ein durch den Schacht 26 nach unten fallender Formling zunächst auf den Fortsatz 61 trifft, der entsprechend der vom Transportarm 58 ausgeführten Schwenkbewegung und dem Radius des Schwenkarmes 58 leicht gebogen ausgebildet ist. Im Zuge der Rückbewegung des Transportarms 58 in seine linke, in der Fig. 4, 9 und 10 dargestellte Endlage, wird der Fortsatz 61 in der letzten Phase dieser Rückbewegung aus dem Bereich unterhalb des Schachtes 26 wegbewegt, so daß der vom Fortsatz 61 getragene Formling, der an der Bewegung des Fortsatzes 61 nicht teilnehmen kann, da er sich mit dem größten Teil seiner Längserstreckung noch im Schacht 26 befindet, nach unten auf die Bodenplatte 57 und in die Halterung 60 fällt und bei der nächsten Schwenkbewegung des Transportarms 58 in Richtung des Pfeiles 63 in die erste Bearbeitungsstation verschoben wird.

Der ersten Behandlungsstation 27 ist ein auf- und abbewegbares Werkzeug 64 zugeordnet, welches sich von oben nach unten konisch verjüngt und beheizt ist. Dieses Werkzeug wird in die obere Öffnung des in der ersten Behandlungsstation 27 befindlichen Formlings 25 abgesenkt, so daß dessen oberer Bereich zunächst vom Werkzeug 64 erwärmt und unter der Einwirkung des vom Werkzeug 64 ausgeübten Drucks kelchartig aufgeweitet wird.

Der aus den beiden Behandlungsstationen 27 und 28 bestehenden Behandlungseinheit ist ein weiteres Transportelement 65 zugeordnet, welches aus einem um eine vertikale Achse 66 - schwenkbaren Block 67 besteht, an welchem zwei Greifer 68 bzw. 69 angebracht sind, deren beiden Teile 68a, 68b bzw. 69a, 69b zur Durchführung der Schließ-und Öffnungsbewegungen ebenfalls in horizontaler Ebene schwenkbar am Block 27 angebracht sind. Der Antrieb für die Öffnungs-und Schließbewegungen wird über Verbindungselemente 56, 62, 71 auf die Greiferteile 68a, 68b bzw. 69a, 69b übertragen. Der Antrieb für die Drehbewegung des Blockes 67 erfolgt über ein zum Verbindungselement 56 koaxiales Rohrstück 83, welches mit dem Block 67 fest verbunden ist. Beide Verbindungsglieder 56 und 83 sind in geeigneter Weise mit jeweils einer Kurve der Kurventrommel 22 verbunden, durch die die jeweiligen Bewegungen auf die vorgenannten Teile bewirkt werden. Es ist, abweichend von der Darstellung in der Zeichnung, auch möglich, an der Kurventrommel 22 oder einem Fortsatz derselben Kurven anzubringen, die in einer horizontalen Ebene, also nach unten oder oben, offen sind. Derartige Kurven können z. B. an einem flanschartigen Fortsatz an einem Ende der Kurventrommel 22 angebracht sein. In horizontaler Ebene umlaufende Kurven haben in bestimmten Fällen, beispielsweise im Zusammenhang mit dem Antrieb über die Verbindungselemente 56 und 83, den Vorteil, daß eine Umlenkung des Kraftflusses weniger erforderlich ist als bei Abnahme der für die Betätigung erforderlichen Kraft von einer am Umfang der Kurventrommel 22 angebrachten Kurve 23. Die beiden Verbindungsglieder 56 und 83 sind von einem zu ihnen koaxialen, stationären Rohrabschnitt 85 umgeben, der, wie auch Fig. 3 erkennen läßt, sich auf der Basis 17 der Baueinheit abstützt. Dieser Rohrabschnitt trägt die Bodenplatte 57 und ggf. weitere in der jeweils ersten Station befindliche Teile. Bei der in den Fig. 4, 9 und 10 dargestellten Position der Teile befinden sich der Greifer 68 in der ersten Behandlungsstation 27 und der Greifer 69 in der zweiten Behandlungsstation 28.

Nach erfolgter Behandlung des Formlings 25 in der ersten Behandlungsstation 27 wird der Block 65 um die vertikale Achse 66 in Richtung des Pfeiles 70 verschwenkt, wobei der vom Greifer 68 erfaßte Formling 25 aus der ersten Behandlungsstation 27 in die zweite Behandlungsstation 28 transportiert wird. An dieser Schwenkbewegung nimmt auch der zweite Greifer 69 teil, der unter Mitnahme des in der zweiten Behandlungsstation 28 befindlichen Formlings 25 in eine Position verschwenkt wird, in welcher sichdieser Formling dicht oberhalb der oberen Öffnung 72 des unteren Förderschachtes 30 befindet. D. h., daß die horizontalen Abstände im Bogenmaß jeweils zwischen Behandlungsstation 27 und Behandlungsstation 28 einerseits und zwischen Behandlungsstation 28 und unterem Förderschacht 30 andererseits einander entsprechen. Nach Erreichen der jeweiligen Endposition werden Greifer 68 und Greifer 69 geöffnet, so daß der vom Greifer 68 gehaltene Formling 25 in der Behandlungsstation 28 und der vom Greifer 69 gehaltene Formling oberhalb des unteren Förderschachtes 30 freigegeben wird. Bei dieser Position der Teile wird zugleich der Transportarm 58 unter Mitnahme eines in der Halterung 60 befindlichen nächsten Formlings in die rechte Endposition verschwenkt. Somit finden nach Rückbewegung entgegen der Richtung des Pfeiles 70 in die in Fig. 9 und 10 dargestellten Ausgangspositionen der Greifer 68 den nächsten Formling in der Bearbeitungsstation 27 und der Greifer 69 den nächsten Formling in der Bearbeitungsstation 28 vor. Im allgemeinen wird so vorgegangen, daß beide Greifer 68 und 69 erst geschlossen werden, nachdem die Behandlungsvorgänge in den beiden Behandlunsstationen 27 und 28 an den Formlingen durchgeführt worden sind. Für den in der Behandlungsstation 27 jeweils zu bearbeitenden Formling kann eine zusätzliche Halterung z. B. in Form einer Gabel vorgesehen sein, die dem Formling während des Aufweitens durch das Werkzeug 64 hält. Diese Halterung ist aus Gründen der Übersichtlichkeit in der Zeichnung nicht dargestellt.

Die Behandlung des Formlings in der Station 28 erfolgt gleichzeitig mit der Behandlung des Formlings in der Station 27. In der Station 28 sind für die Behandlung der Formlinge, die in einem Aufweiten derselben mit anschließendem Thermofixieren besteht, Werkzeuge 73 und 74 vorgesehen, die auf-und abbewegbar sind. Eine detaillierte Beschreibung dieser Werkzeuge erübrigt sich, da sie nicht Gegenstand dieser Erfindung sind.

Fig. 11 zeigt einen etwa radialen Längsschnitt durch die Baueinheit B dicht neben einer der Bearbeitungsstationen 28. Fig. 11 läßt das stationäre Gehäuse 16 erkennen, innerhalb desselben dazu koaxial die Kurventrommel 22 angeordnet ist. Das stationäre Gehäuse 16 ist im Bereich jeder Behandlungseinheit mit vertikalen Langlöchern 75 versehen, deren Anzahl und Länge in einer vertikalen Ebene abhängen von der Anzahl der in der jeweiligen Behandlungseinheit zu betätigenden Einzelwerkzeuge. Jedem dieser Werkzeuge ist eine Kurve 23 in der Kurventrommel 22 zugeordnet. Die Kurven 23 dienen zur Führung von Kurvenrollen 24, die jeweils über eine Achse 76, die durch eines der Langlöcher 75 im stationären Gehäuse 16 hindurchragt, mit einer Halterung für das jeweilige Werkzeug verbunden ist. Jeder Kurve 23 sind somit soviele Kurvenrollen 24 zugeordnet, wie in einer Baueinheit Behandlungsmittel vorhanden sind, die die gleiche Behandlung an den Formlingen durchführen und durch diese Kurve betätigt werden. D. h., daß normalerweise die Anzahl der Kurvenrollen 24 pro Kurve mit der Anzahl der Behandlungseinheiten an jeder Baueinheit A, B, C übereinstimmt.

Bei dem in Fig. 11 dargestellten Ausführungsbeispiel ist im oberen Bereich der Behandlungsstation 28 eine Werkzeugkombination 73 vorgesehen, die zwei unabhängig voneinander betätigbare, d. h., vertikal verschiebbare Werkzeuge aufweist. Im unteren Bereich der Behandlungsstation 28 ist eine Werkzeugkombination 74 vorgesehen, die vier voneinander unabhängig betätigbare, d.h. vertikal verschiebbare Einzelwerkzeuge aufweist. Demzufolge sind im oberen Bereich der Behandlungsstation 28 zwei Werkzeughalterungen 77a, 77b vorhanden, von denen jede ein Werkzeug 73a, 73b trägt. Beide Werkzeuge 73a, 73b sind ringförmig ausgebildet und koaxial zueinander derart angeordnet, daß sich das Werkzeug 73b kleineren Durchmessers innerhalb des Werkzeuges 73a befindet.

Die Werkzeugkombination 74 besteht aus vier ebenfalls im wesentlichen kreisringförmig ausgebildeten, koaxial zueinander angeordneten Werkzeugen, die von Halterungen 78a, 78b, 78c und 78d getragen werden. Jeder der Halterungen 77a, 77b bzw. 78a, 78b, 78c und 78d ist eine Kurvenrolle 23 mit einer die Verbindung zur jeweiligen Halterung herstellenden Achse 76 zugeordnet, so daß bei rotierender Kurventrommel 22 die für die Bewegung der Werkzeuge zur Durchführung der jeweiligen Behandlungen an den Formlingen erforderliche Kraft über die jeweilige Kurve 23 und die zugehörige Kurvenrolle 24 auf das Werkzeug übertragen wird. Die Werkzeughalterungen sind an paarweise angeordneten vertikalen Führungsleisten 82 geführt, die am stationären Gehäuse 16 angebracht sind.

Insbesondere Fig. 11 der Zeichnung läßt erkennen, daß die erfindungsgemäße Ausgestaltung es ermöglicht, eine größere Anzahl von Werkzeugen in der Behandlungsstation 28 auf engem Raum und ggf. gleichzeitig auf den Formling 25 zur Einwirkung zu bringen, ohne daß gleichzeitig die Notwendigkeit bestünde, die Kurven 23 für die einzelnen Werkzeuge bzw. deren Halterungen in entsprechend kleinen Abständen voneinander anzuordnen. Tatsächlich wäre dies aufgrund der geringen vertikalen Abstände der mit dem Formling zusammenwirkenden Werkzeuge schwierig, wenn nicht sogar unmöglich, zumal aufgrund der zumindest bei einigen Werkzeugen erheblichen Kräfte, die von der Kurvenrolle auf das jeweilige Werkzeug zu übertragen sind, die kraftübertragenden Teile auch entsprechend dimensioniert sein müssen. Insbesondere Fig. 11 der Zeichnung läßt erkennen, daß durch Verwendung entsprechend langer Distanzstücke 80a, 80b, die die einzelnen unmittelbar am Formling 25 angreifende Werkzeuge 73a, 73b tragen, die Kurven 23 in Abständen voneinander auf der Kurventrommel 22 angeordnet sein können, die den Abständen der Werkzeuge 73a, 73b voneinander oder deren Zuordnung zueinander nicht entsprechen. Dies gilt auch für die Werkzeuge der unteren Werkzeugkombination 74 und deren Kurven 23. Im Ergebnis bedeutet dies, daß die Summe der von allen Werkzeugen ausgeführten Hübe die Höhe der Kurventrommel 23 bestimmt.

Insbesondere die Fig. 3 und 4 lassen erkennen, daß die beiden Stationen 27, 28 jeder Behandlungseinheit relativ zum Gehäuse 16 unterschiedlich positioniert sind. Die jeweils zweiten Stationen 28 aller Behandlungseinheiten sind zumindest derart direkt mit dem Gehäuse verbunden, daß die Führungsleisten 82 für die Werkzeuge am Gehäuse befestigt sind, so daß letzteres auch die Reaktionskräfte aufnimmt, die aus den Kräften resultieren, die in den jeweils zweiten Behandlungsstationen 28 durch die Werkzeuge zur Bearbeitung der Formlinge aufgebracht werden. Die jeweils ersten Stationen 27 aller Behandlungseinheiten sind den jeweils zugehörigen zweiten Behandlungsstationen 28 gegenüber etwas nach außen versetzt, so daß sie einen größeren radialen Abstand von der Längsachse des Gehäuses 16 aufweisen als die jeweils zweiten Stationen 28. Dabei ist die Anordnung so getroffen, daß alle ersten Stationen 27 einerseits und alle zweiten Stationen 28 andererseits auf jeweils einem gemeinsamen, zum Gehäuse 16 koaxialen Kreis 87 bzw. 88 angeordnet sind und der Kreis 88, auf welchem die jeweils ersten Stationen 27 liegen, einen größeren Durchmesser aufweist als der Kreis 87, auf dem die zweiten Stationen 28 aller Behandlungseinheiten liegen. Die vorbeschriebene Anordnung erlaubt es, eine größere Anzahl von Stationen pro Baueinheit vorzusehen als bei Anordnung beider Stationen einer Behandlungseinheit unmittelbar am Gehäuse 16, also beispielsweise auf dem Kreis 87 der Fig. 4. Bei der vorbeschriebenen Anordnung ist es im allgemeinen nicht möglich, die Behandlungsmittel in den ersten Stationen 27 direkt, also über Kurvenrollen 24 und Achsen 76 von der Kurventrommel 22 abzunehmen. Damit ist jedoch kein ins Gewicht fallender Nachteil verbunden, da in den ersten Stationen 27 überwiegend Behandlungen an den Formlingen, z. B. Temperiervorgänge, durchgeführt werden, die keinen oder keinen großen mechanischen Kraftaufwand erfordern. Andererseits besteht in den Fällen, in denen eine von der Kurventrommel abgeleitete, d. h. zentrale Betätigung irgendwelcher Mittel zweckmäßig ist,die Möglichkeitceit, Bowdenzüge oder andere geeignete Übertragungsmittel zu verwenden, über die die Bewegung von Behandlungsmitteln in den ersten Stationen 27 von der Kurventrommel 22 abgeleitet wird. -Für die ersten Stationen 27 können im Bedarfsfall besondere, vom Gehäuse 16 unabhängige Halterungen oder Stützen, z. B. die Rohrstütze 85 (Fig. 3 und 9) vorgesehen sein. Im übrigen wird durch die vorbeschriebene relative Anordnung der beiden Stationen 27 und 28 einer Behandlungseinheit zueinander auch der Transport innerhalb der Behandlungseinheit von einer Station zur anderen Station erleichtert, da er nicht entlang dem Umfang des Gehäuses 16 zu erfolgen braucht, wodurch hinsichtlich der Transportmittel und der Transportwege eine größere Flexibilität erreicht wird.

Die erfindungsgemäße Ausgestaltung der Vorrichtung hat zur Folge, daß die Werkzeuge in den einzelnen Behandlungseinheiten in Umfangsrichtung entsprechend der Umlaufgeschwindigkeit der Kurventrommel 22 aufeinanderfolgend betätigt werden, wobei der Arbeitszyklus in jeder Station einer vollen Umdrehung der Kurventrommel 22 entspricht.

Die aus dem unteren Transportschacht 30 kommenden Formlinge fallen auf einen stationären Boden, dessen Oberfläche in derselben Ebene liegt wie die Oberfläche der unteren Ringscheibe 18. Bei diesem stationären Boden kann es sich analog der Anordnung und Ausgestaltung des der oberen Ringscheibe 15 zugeordneten Bodens 53 um eine Ringscheibe handeln. Von dem stationären Boden werden die Formlinge nach Verlassen des unteren Schachtes 30 durch einen Arm 87, der zwischen einer Position unterhalb des unteren Schachtes 30 und einer Position oberhalb der unteren Ringscheibe 18 hin-und herschwenkbar ist. auf die untere Ringscheibe 18 geschoben (Fig. 4). Von dort gelangen die Formlinge sämtlicher Behandlungseinheiten auf eine Hauptableitungsbahn 94 (Fig. 7), die zu einer der zwischen den Baueinheiten befindlichen Fördereinrichtungen 19 oder, wenn es sich um die letzte Baueinheit C handelt. zu einem Sammelbehälter oder dgl. führt.

Der Antrieb der Kurventrommel 22 erfolgt durch einen Motor 89 über ein Zahnrad 90. welches mit einer Innenverzahnung 91 an einem Flansch 92 der Kurventrommel 22 kämmt.

In Fig. 12 der Zeichnung ist eine Anordnung einer Gesamtvorrichtung dargestellt, bei welcher zwei Baueinheiten B mit jeweils einer Baueinheit A bzw. C kombiniert sind. Eine derartige Ausgestaltung trägt der Tatsache Rechnung, daß beispielsweise die Behandlungsdauer in den Baueinheiten B merklich länger dauert als in den Baueinheiten A und C. Eine derartige Anordnung setzt voraus, daß die von der Baueinheit A kommenden Vorformlinge auf zwei Förderwege 19 verteilt beiden Baueinheiten B zugeführt werden, wobei die diese beiden Baueinheiten B verlassenden Formlinge wieder zu einem Förderstrom zusammengefaßt werden müssen, der der Baueinheit C aufgegeben wird.

## Ansprüche

1. Vorrichtung zum Herstellen von Hohlkörpern aus thermoplastischem Kunststoff unter Anwendung eines Verfahrens, bei welchem ein hohler, im wesentlichen zylindrischer und mit einem Boden versehener Formling (25) einer Behandlung unterzogen wird, bei welcher zumindest ein Teilbereich des Formlings temperiert und/oder verformt wird, dadurch gekennzeichnet, daß mehrere Behandlungsstationen in horizontalen Abständen an der Mantelfläche eines vertikalen, im wesentlichen zylindrischen Gehäuses (16) angeordnet sind und die so gebildete Baueinheit (A, B, C) in ihrem oberen Bereich eine um die vertikale Achse rotierende Ringscheibe (15) zum Zuführen der zu behandelnden Formlinge (25) und in ihrem unteren Bereich eine um die vertikale Achse rotierende zweite Ringscheibe (18) zum Wegführen der behandelten Formlinge (25) aufweist und die vertikalen Abstände zwischen oberer Ringscheibe (15) und jeweiliger Behandlungsstation (27, 28) sowie Behandlungsstation und unterer Ringscheibe (18) durch im wesentlichen vertikale Transportwege (26, 30) überbrückt werden.

2. Vorrichtung nach Anspruch 1, dadurch gekennzeichnet, daß jeweils mindestens zwei Behandlungsstationen (27, 28), in denen aufeinanderfolgende Behandlungsschritte am Formling (25) durchgeführt werden, zu einer Behandlungseinheit zusammengefaßt sind und mehrere derartige Behandlungseinheiten in horizontalen Abständen an der Mantelfläche des Gehäuses (16) angeordnet sind und in jeder Behandlungseinheit Transportelemente (65) vorgesehen sind, durch die der Abstand zwischen den Behandlungsstationen (27, 28) einer Behandlungseinheit überbrückt wird.

3. Vorrichtung nach Anspruch 2, dadurch gekennzeichnet, daß die Behandlungsstationen (27, 28) einer Behandlungseinheit im wesentlichen nebeneinander angeordnet und die Transportelemente (65) für den Transport der Formlinge (25) zwischen den Behandlungsstationen jeweils einer Behandlungseinheit mit Greifereinrichtungen (68, 69) versehen sind.

4. Vorrichtung nach Anspruch 2, dadurch gekennzeichnet, daß die Transportelemente (54) für den Transport der Formlinge (25) eine Schwenkbewegung ausführen.

5. Vorrichtung nach Anspruch 2, dadurch gekennzeichnet, daß die Transportelemente (65) auch den Transport der Formlinge (25) zwischen dem im wesentlichen vertikalen Transportweg (26), der den Abstand zwischen oberer Ringscheibe (15) und erster Behandlungsstation (27) der Behandlungseinheit überbrückt, und/oder zwischen zweiter Behandlungsstation (28) der Behandlungseinheit und dem im wesentlichen vertikalen Transportweg (30) der den Abstand zwischen zweiter Behandlungsstation (28) und unterer Ringscheibe (18) überbrückt, bewirken.

6. Vorrichtung nach Anspruch 1, dadurch gekennzeichnet, daß für die Behandlung der Formlinge erforderliche bewegbare Mittel (64: 73, 74) im wesentlichen parallel zur vertikalen Längsachse des Gehäuses (16) bewegbar an diesem angebracht sind.

7. Vorrichtung nach Anspruch 6, dadurch gekennzeichnet, daß bei Vorhandensein von zwei oder mehr Behandlungsmitteln (73, 74) in einer Behandlungsstation wenigstens einige derselben vertikal übereinander angeordnet sind.

8. Vorrichtung nach Anspruch 1, dadurch gekennzeichnet, daß innerhalb des stationären Gehäuses (16) eine um die vertikale Achse drehbare Trommel (22) angeordnet ist, die an ihrer äußeren Mantelfläche Kurven (23) trägt, mit denen Kurvenrollen (24) in Eingriff sind, die wenigstens einem der Bearbeitungsmittel (73, 74) in der jeweiligen Behandlungsstation (28) zugeordnet sind.

9. Vorrichtung nach Anspruch 2, dadurch gekennzeichnet, daß in der ersten der beiden Behandlungsstationen (27, 28) einer Behandlungseinheit Bereiche des Formlings (25) auf eine für die Behandlung in der zweiten Behandlungsstation (28) erforderliche Temperatur gebracht werden.

10. Vorrichtung nach Anspruch 2, dadurch gekennzeichnet, daß die beiden Behandlungsstationen (27, 28) einer Behandlungseinheit in unterschiedliche Abständen von der Längsachse des Gehäuses 16 angeordnet sind.

11. Vorrichtung nach Anspruch 2, dadurch gekennzeichnet, daß alle Behandlungsstationen (27, 28) einer Baueinheit (A, B, C), in denen dieselben Behandlungen an den Formlingen (25) durchgeführt werden, auf einem gemeinsamen Kreis (87, 88) angeordnet sind und die jeweils von Stationen (27, 28) gleicher Behandlung gebildeten Kreise (87, 88) unterschiedliche Durchmesser aufweisen und zur Längsachse des Gehäuses (16) koaxial angeordnet sind.

12. Vorrichtung nach Anspruch 7, dadurch gekennzeichnet, daß in wenigstens einer der Baueinheiten (A - C) die Kurventrommel (22) ausschließlich zum Antrieb von in der zweiten Behandlungsstation (28) jeder Behandlungseinheit vorgesehenen Behandlungsmittel (73, 74) dient.

13. Vorrichtung nach Anspruch 1, dadurch gekennzeichnet, daß von wenigstens einer horizontalen Transportbahn (34, 35, 36, 37), die unterseitig von der oberen rotierenden Ringscheibe (15) begrenzt ist, im wesentlichen horizontal verlaufende Abzweigbahnen (38) abgehen, deren der Transportbahn jeweils abgekehrtes Ende über einem der im wesentlichen vertikalen Transportwege (26) angeordnet ist, durch welche der Abstand zwischen der oberen Ringscheibe (15) und der zugehörigen Behandlungsstation (27, 28) oder Behandlungseinheit überbrückt wird.

14. Vorrichtung nach Anspruch 1, dadurch gekennzeichnet, daß der horizontale Bereich, in welchem die obere Ringscheibe (15) umläuft, in Sektoren (34, 35, 36, 37) gleicher Größe unterteilt ist und jedem Sektor eine eigene Zuführungseinrichtung (39, 40, 41, 42) für das Zuführen der Formlinge in den zugehörigen Sektor zugeordnet ist.

15. Vorrichtung nach Anspruch 13, dadurch gekennzeichnet, daß die Transportbahn (34, 35, 36, 37) oberhalb der Ringscheibe seitlich durch stationäre Führungselemente (33) für die Formlinge (25) begrenzt ist.

16. Vorrichtung nach Anspruch 13, dadurch gekennzeichnet, daß am Ende jeder Abzweigbahn (38) oberhalb des ihr nachgeordneten vertikalen Transportweges (26) ein die Übergabe der einzelnen Formlinge (25) von der Abzweigbahn (38) an den nachgeschalteten vertikalen Transportweg (26) steuerndes Steuerglied (47) vorgesehen ist.

17. Vorrichtung nach Anspruch 16, dadurch gekennzeichnet, daß das Steuerglied (47) in im wesentlichen horizontaler Ebene zwischen zwei Endpositionen hin-und herbewegbar ist und an seiner mit den Formlingen (25) zusammenwirkenden Seite mit einer Randausnehmung (52) versehen ist, deren Querschnittsabmessungen den Querschnittsabmessungen der zu transportierenden Formlinge angepaßt sind, und die Randausnehmung (52) in der einen Endposition des Steuerelements eine Fortsetzung der Abzweigbahn (38) bildet und in seiner anderen Endposition sich oberhalb des vertikalen Transportweges (26) etwa in Verlängerung desselben befindet.

18. Vorrichtung nach Anspruch 15, dadurch gekennzeichnet, daß sämtliche Steuerglieder (47) einer Baueinheit (A-C) unabhängig voneinander in Betrieb und außer Betrieb gesetzt werden können.

19. Vorrichtung nach Anspruch 1, dadurch gekennzeichnet, daß wenigstens die die Formlinge (25) tragende Fläche wenigstens einer der beiden Ringscheiben (15, 18) aus Glas besteht.

20. Vorrichtung zum Herstellen von Hohlkörpern aus thermoplastischem Kunststoff unter Anwendung eines Verfahrens, bei welchem ein Formling (25) unterhalb der Glasumwandlungstemperatur axial gestreckt wird, dadurch gekennzeichnet, daß jeweils eine Station (27) zum Temperieren des Formlings (25) auf eine Temperatur unterhalb der Glasumwandlungstemperatur und eine Station (28) zum anschließenden Strecken des Formlings jeweils eine Behandlungseinheit bilden und mehrere dieser Behandlungseinheiten zu einer Baueinheit (A) gemäß Anspruch 1 zusammengefaßt sind.

21. Vorrichtung zum Herstellen von Hohlkörpern aus thermoplastischem Kunststoff unter Anwendung eines Verfahrens, bei welchem ein Formling an seinem offenen Ende voraufgeweitet und ausgehend von diesem offenen Ende auf einen größeren Durchmesser aufgeweitet und thermofixiert wird, dadurch gekennzeichnet, daß jeweils die Station (27) zum Voraufweiten des freien Ende dessen Formlings (25) und die Station (28) zum anschließenden weiteren Aufweiten des Formlings zu seinem Enddurchmesser und Thermofixieren desselben jeweils eine Behandlungseinheit bilden und mehrere dieser Behandlungseinheiten zu einer Baueinheit (B) gemäß Anspruch 1 zusammengefaßt sind.

22. Vorrichtung zum Herstellen von Hohlkörpern aus thermoplastischem Kunststoff unter Anwendung eines Verfahrens, bei welchem ein Formling an dem seine Öffnung begrenzenden Bereich eine Durchmesserverringerung erfährt und an das freie Ende ein Bördelrand angeformt wird, dadurch gekennzeichnet, daß jeweils die Station zum Verengen des Endbereiches und die Station (28) zum anschließenden Anbringen eines Bördelrandes am Formling jeweils eine Behandlungseinheit bilden und mehrere dieser Behandlungseinheiten zu einer Baueinheit (C) gemäß Anspruch 1 zusammengefaßt sind.

23. Vorrichtung nach den Ansprüchen 20 bis 22, dadurch gekennzeichnet, daß die Baueinheiten (A-C) zum Ausführen aufeinanderfolgender Behandlungsschritte am Formling hintereinandergeschaltet und durch Fördereinrichtung miteinander verbunden sind.

24. Vorrichtung gemäß Anspruch 20 und 22, dadurch gekennzeichnet, daß zwischen den Baueinheiten (A - C) zur Durchführung zusätzlicher Behandungsschritte Arbeitsstationen (31, 32) zur Zwischenbehandlung, insbesondere zum Entfernen von Überschußmaterial, vorgesehen sind.

FIG.1

FIG.12

0 280 181

FIG. 2

**FIG.3**

**FIG.4**

FIG.5

22

23

FIG.6

16

75

FIG. 7

FIG. 8

FIG. 9

FIG. 10

FIG. 11